# EUROPEAN PATENT SPECIFICATION

(11) **EP 4 522 312 B1**
(45) Date of publication and mention of the grant of the patent: **04.03.2026**
(21) Application number: 23729957.3
(22) Date of filing: 02.06.2023
(51) Int. Cl.: B01D 53/50, B01D 53/62

(54) **AMMONIA-UTILIZING CARBON DIOXIDE CAPTURE WITH FLUE GAS DESULFURIZATION SYSTEM, AND METHOD**
AMMONIAK NUTZENDE KOHLENDIOXIDABSCHEIDUNG MIT RAUCHGASENTSCHWEFELUNGSSYSTEM UND VERFAHREN
CAPTURE DE DIOXYDE DE CARBONE UTILISANT DE L'AMMONIAC AVEC SYSTÈME DE DÉSULFURATION DE GAZ DE COMBUSTION, ET PROCÉDÉ

(30) Priority: 03.06.2022 IT 202200011756
(43) Date of publication of application: 19.03.2025
(73) Proprietor: NUOVO PIGNONE TECNOLOGIE - S.R.L., 50127 Florence (IT)
(72) Inventor: BALFE, Michael, 50127 Florence (IT); WEINGÄRTNER, Christoph, 50127 Florence (IT); BECKER, Thomas, 50127 Florence (IT)
(74) Representative: Novagraaf Group
(86) International application number: PCT/EP2023/025263
(87) International publication number: WO 2023/232293

(56) References cited:
- CN-A- 102 172 470
- CN-A- 102 671 531
- CN-A- 103 203 174
- US-A- 6 139 807

## Description

### TECHNICAL FIELD

The present disclosure relates to flue gas treatment. Specifically, embodiments disclosed herein relate to ammonia-utilizing carbon capture and storage systems (in short CCS systems) and desulfurizing systems for pretreatment of flue gas.

### BACKGROUND ART

Most of the energy used in the world is still generated from combustion of fossil fuels containing carbon and hydrogen, such as coal, oil and natural gas. In addition to carbon and hydrogen, these fuels contain oxygen, moisture and contaminants such as ash, sulfur (often in the form of sulfur oxides, referred to as SOₓ), nitrogen compounds (often in the form of nitrogen oxides, referred to as NOₓ), chlorine, mercury and other trace elements.

Awareness regarding the damaging effects of contaminants released in the atmosphere during combustion triggered the enforcement of increasingly more stringent limits on emissions from power plants, refineries and other industrial processes. There is an increased pressure on operators of such plant to achieve near zero emission of contaminants.

In the combustion of fuel, such as coal, oil, peat, waste, biofuel, natural gas or the like, for instance, used for power generation or for the production of materials such as cement, steel, glass, steam, heating media and hydrogen, and the like, a stream of hot flue gas is generated. The hot flue gas contains, among other pollutants, large amounts of carbon dioxide (CO₂), which is responsible for the so-called greenhouse effect and related global temperature increase, as well as sulfur oxides (SOₓ). If released in the atmosphere, sulfur oxides are responsible for acid rain.

Numerous systems and processes have been developed, aimed at reducing the emission of contaminants. These systems and processes include, but are not limited to, desulfurization systems, particulate filters, as well as use of one or more sorbents that absorb contaminants from the flue gas. Examples of sorbents include, but are not limited to, activated carbon, ammonia, limestone and the like. CN 102 671 531 A discloses absorbing fume pollutants using ammonia water as absorbent.

It has been shown that ammonia efficiently removes carbon dioxide from flue gas. In one particular application, absorption and removal of carbon dioxide from a flue gas stream with ammonia is conducted below ambient temperature. These systems are based on a so-called Chilled Ammonia Process (shortly CAP, a particular ammonia-utilizing process for CCS). Other ammonia-utilizing systems, such as the so-called mixed salt process (MSP), or mixtures of amines containing ammonia are known in the art to capture and remove carbon dioxide from flue gas prior to discharging the carbon dioxide-lean flue gas in the atmosphere.

Carbon dioxide capture is not free of disadvantages. Known carbon capture systems are cumbersome, expensive and energy-consuming, such that reduction of carbon dioxide emissions in the environment is achieved at cost of a reduced thermodynamic efficiency of the power-generation cycle or other industrial CO₂ emission process.

Efforts are currently being made to reduce the costs, both in terms of CAPEX as well as of reduction of thermodynamic efficiency, of the carbon capture and storage systems.

Efficiency of the carbon capture process can be increased if the concentration of carbon dioxide in the flue gas increases. A higher concentration of carbon dioxide also involves a reduction of the overall volumetric flue gas flowrate to be processed, which has a positive impact in reducing the cost of the CCS.

It would also be beneficial to remove contaminants, such as sulfur oxides, from the flue gas prior to delivering the flue gas to a carbon dioxide capture unit.. However, sulfate oxides scrubbing upstream of the carbon dioxide capture process has some drawbacks. Among others, the need to add oxygen to the flue gas stream negatively affects the efficiency of carbon dioxide capture process downstream of the desulfurizing scrubber.

Methods and systems alleviating or solving the above drawbacks would be welcomed in the art.

### SUMMARY

The present invention is defined in the accompanying claims. According to one aspect, a method for ammonia-utilizing post combustion carbon dioxide capture is disclosed herein, which improves the overall efficiency of the flue gas treatment process. The method according to the present disclosure includes a step of desulfurizing a flue gas stream in a desulfurizing scrubber system and remove sulfur oxides from the flue gas stream. The method further includes a step of processing the desulfurized flue gas to remove carbon dioxide therefrom through an ammonia-utilizing carbon dioxide capture unit. To improve the efficiency of the carbon dioxide removing process, according to embodiments disclosed herein the desulfurizing step comprises recycling desulfurized flue gas as an oxidant through the desulfurizing scrubber.

The desulfurized flue gas contains sufficient residual oxygen to oxidize dissolved ionic SO₂ removed through reactions in the desulfurizing scrubber, which increase affinity of ionic sulfur to the liquid phase.

In summary, sulfur oxides are removed from the flue gas based on the following reactions:

SO₂ + H₂O + xNH₃ ↔ (NH₄)ₓH₂₋ₓSO₃

(NH4)ₓH₂₋ₓSO₃ + ½ O₂ + (2-x)NH₃ ↔ (NH₄)₂SO₄

wherein x= 1 or 2

Ammonia sulfate (NH₄)₂SO₄ resulting from the desulfurization process is used as a valuable product from the desulfurization process, for instance as fertilizer. The oxygen required for the completion of the oxidation process is provided by the recycled desulfurized flue gas. Compared with desulfurizing processes of the current art, the method disclosed herein reduces the total flowrate which streams through the carbon dioxide capture process downstream of the desulfurizing process. Moreover, the molar concentration of carbon dioxide is increased. Both factors improve the efficiency of the carbon dioxide capture process, rendering it economically more convenient and reducing the energy needed to run the process.

In some embodiments, the ammonia-utilizing carbon dioxide capture unit is a chilled ammonia process unit. Nonetheless, other ammonia-utilizing CCS systems can be used, such as a mixed salt process.

The desulfurized flue gas which is recycled as an oxygen source towards the desulfurizing scrubber can be recycled from an outlet of the desulfurizing scrubber and/or from the carbon dioxide capture unit downstream of the desulfurizing scrubber. In this second case, the recycled desulfurized flue gas has been cooled and conditioned in the carbon dioxide capture unit prior to be recycled.

According to a further aspect, disclosed herein is an ammonia-utilizing carbon capture system for treating post-combustion gas. The system comprises a desulfurizing scrubber, such as an ammonia-based desulfurizing scrubber, including a flue gas inlet, an oxidant feeding duct, and a desulfurized flue gas outlet. The system further comprises an ammonia-utilizing carbon dioxide capture section or unit.

In embodiments disclosed herein, the oxidant feeding duct is adapted to receive desulfurized flue gas and to recycle desulfurized flue gas to the desulfurizing scrubber, where the recycled desulfurized flue gas is used as oxidant, i.e. as a source of oxygen for the desulfurizing scrubbing process.

A desulfurized flue gas recycle line is provided, to recycle desulfurized flue gas to the desulfurizing scrubber. For instance, the recycle line can be fluidly coupled to an oxidant sparger of the desulfurizing scrubber. The desulfurized flue gas recycle line can be fluidly coupled to the desulfurized flue gas outlet, of the desulfurizing scrubber and/or to the carbon dioxide capture unit.

Further features and embodiments of the method and of the system according of the present description are described below, reference being made to the accompanying drawings, and are set out in the appended claims.

### BRIEF DESCRIPTION OF THE DRAWINGS

Reference is now made briefly to the accompanying drawings, in which:
Fig.1 is a functional block diagram of a combined flue gas desulfurization and ammonia-utilizing carbon capture system; and
Fig.2 is a schematic of an embodiment of a desulfurizing scrubber which can be used in the system of Fig. 1.

### DETAILED DESCRIPTION

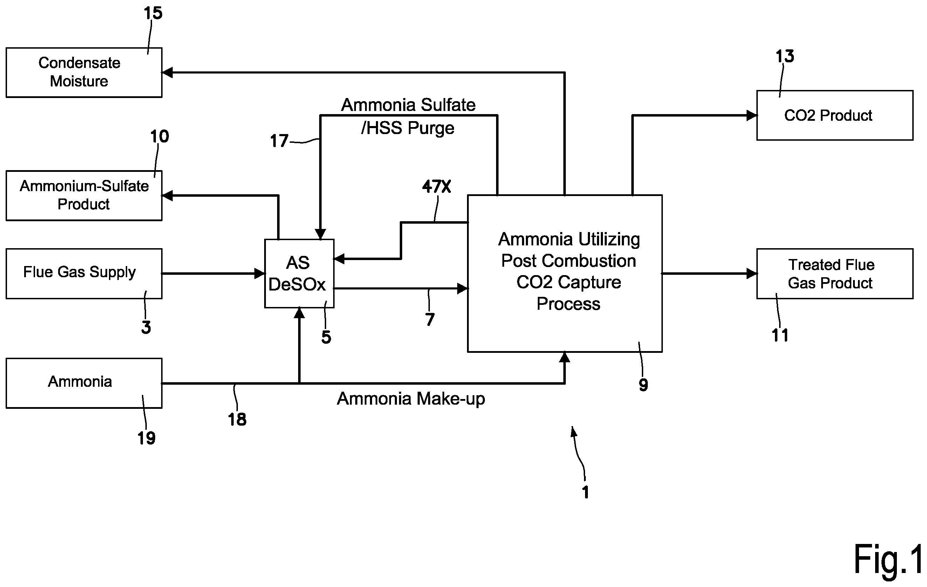

Referring initially to Fig. 1, a functional block diagram is shown of a system 1 for flue gas treatment. Flue gas, for instance combustion gas from a gas turbine, a steam generator of a steam turbine, a burner, an industrial CO₂ emission source or the like, is delivered at 3 to an ammonia-based desulfurization process 5. The desulfurization process 5 includes an ammonia-based desulfurizing scrubber. An embodiment of a desulfurizing scrubber for combination with a CCS system will be described below.

Desulfurized flue gas flows from the flue gas desulfurization process 5 through line 7 to an ammonia-utilizing carbon dioxide capture unit 9. Ammonium sulfate is collected at 10. Treated flue gas is discharged at 11 in the atmosphere after carbon dioxide has been partly or fully removed therefrom. Carbon dioxide is delivered at 13 to further polishing steps, a liquefaction process, a storage facility, or the like. Condensate moisture from the ammonia-utilizing carbon dioxide capture unit 9 can be collected at 15 and can be used as water make-up in the desulfurization process 5 or in the carbon dioxide capture unit 9. Ammonia sulfate from the ammonia-utilizing carbon dioxide capture unit 9 can be delivered through line 17 and integrated with the ammonia sulfate produced from the ammonia-based desulfurization process 5. Block 19 schematically represents an ammonia storage tank which provides (see line 18) ammonia make-up to the ammonia-utilizing desulfurization process 5 and to the ammonia-utilizing carbon dioxide capture unit 9 as required.

The ammonia-utilizing carbon dioxide capture unit 9 can be based on a chilled ammonia process (CAP), a mixed salt process (MSP) or any other ammonia-utilizing process adapted to remove carbon dioxide from the desulfurized flue gas.

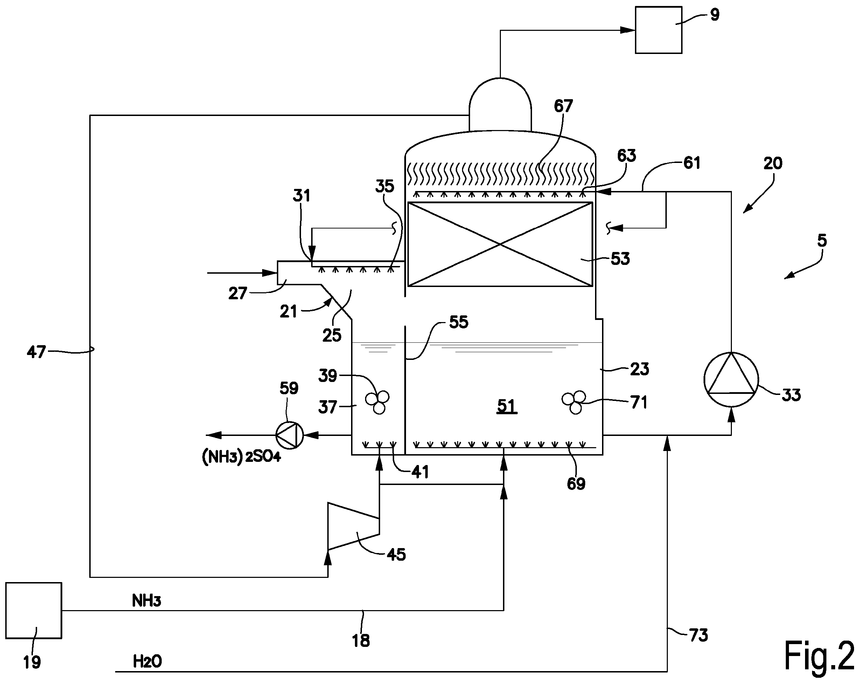

For a better understanding of the invention, a more detailed representation of an embodiment of an ammonia-based desulfurizing scrubber 20 for the ammonia-based desulfurization process 5 is shown in Fig.2. Those skilled in the art will understand that Fig.2 shows one of several possible layouts of a desulfurizing scrubber using ammonia salts, and that other embodiments are possible.

In some embodiments, the desulfurizing scrubber 20 can include a flue gas quench section 21 and an absorber tower section 23. The flue gas quench section 21 comprises a flue gas quench duct 25 fluidly coupled to a flue gas inlet 27, through which superheated flue gas enters the quench duct 25.

Flue gas quenching is achieved through an ammonia sulfate solution which is dispensed through a quenching distributor 31. The ammonia sulfate solution is circulated through a main circulation pump 33 and is sprayed into the flue gas through a spray nozzle grid 35. Water contained in the ammonia sulfate solution sprayed in the flue gas quench duct 25 is vaporized from the ammonia sulfate solution quenching the flue gas until the adiabatic saturation temperature is reached. In this manner the ammonia sulfate solution is concentrated using residual flue gas heat and the internal packing materials of the absorber tower section 23 are protected from high temperature flue gas.

The flue gas quench section 21 further comprises a sump 37, in which concentrated ammonia sulfate solution exiting the quench duct collects by gravity. A mixing device 39, for instance an impeller-type mixing device, is arranged in the sump 37, to maintain a uniform temperature and concentration in the solution collected in the sump 37 and further to suspend possible precipitate.

The desulfurizing scrubber 20 comprises an oxidant feeding duct to feed an oxidant to the scrubber.

In some embodiments, a first oxidant sparger 41 is fluidly coupled to the oxidant feeding duct and is arranged at the bottom of the sump 37. In the embodiment of Fig.2, the oxidant feeding duct and the first oxidant sparger 41 are fluidly coupled to a desulfurized flue gas outlet of the desulfurizing scrubber 20 through a desulfurized flue gas recycling line 47. The desulfurized flue gas outlet is arranged at the top of the absorber tower section 23. An oxidant fan 45 can be provided along the recycling 47, which fluidly couples the desulfurized flue gas outlet to the first oxidant sparger 41.

In some embodiments, the desulfurized flue gas recycling line 47 can be fluidly coupled (see line 47X in Fig. 1) to an intermediate section of the carbon dioxide capture unit 9. Through line 47X a portion of partially cooled desulfurized flue gas (containing CO₂) may also be provided as oxidation source to the desulfurizing scrubber 20, in addition to, or instead of using desulfurized flue gas directly from the outlet of the desulfurizing scrubber 20, if convenient.

According to the present disclosure the oxidizing reaction in the sump 37 is thus achieved by exploiting oxygen contained in the desulfurized flue gas delivered at the top of the absorber tower section 23 and/or from the carbon dioxide capture unit 9, rather than adding ambient air into the desulfurizing process.

The flue gas quench duct 25 delivers quenched and water-saturated flue gas to the absorber tower section 23, between a main oxidation basin 51 arranged at the bottom of the absorber tower section 23 and a structured packing 53 of the absorber tower section 23. In some embodiments, the main oxidation basin 51 at the bottom of the absorber tower section 23 is separated from the sump 37 by a partition wall 55, which maintains the higher concentration of ammonia sulfate species in the sump 37 and is advantageous for downstream dewatering steps.

Flue gas exiting the quenching duct enters the absorber tower section 23 above the partition wall 55.

High-concentration ammonia sulfate solution is gradually removed from the sump 37 through a suction pump 59, further dewatered and dried to produce dry ammonia sulfate.

The degree of ammonia sulfate saturation is controlled by adjusting the quantity of solution supplied to the quenching distributor 31. Feeding surplus solution to the quenching distributor 31 lowers the concentration of ammonia sulfate in the product which overflows the sump 37 to the main oxidation basin 51.

In addition to the main oxidation basin 51, the absorber tower section 23 further comprises a liquid distributor 61 which feeds ammonia sulfate solution from the main oxidation basin 51 through the main circulation pump 33 to a grid of spray nozzles 63 arranged above the structured packing 53. A high-capacity demister 67 is arranged above the spray nozzles 63, to remove from the flue gas any liquid entrained by the flue gas flowing through the packing 53 towards the top of the desulfurizing tower section 23.

Formulated ammonia sulfate solution is supplied by the main circulation pump 33 to the top of the packing 53 and distributed via the liquid distributor 61 and relevant spray nozzles 63.

Sulfate oxides species (SOₓ) from the flue gas are absorbed into the formulated ammonia sulfate solution as the ammonia sulfate solution falls counter-currently through the rising flue gas in the packing 53. Acidified ammonia sulfate solution exits the bottom of the packing and falls into the main oxidation basin.

The main oxidation basin 51 is equipped with an oxidant sparger 69 and a mixing device 71, for example an impeller-type mixing device. The mixing device 71 is used to avoid local composition and temperature differences in the liquid phase. The sparger 69 is fluidly coupled to the oxidant feeding duct.

Moreover, the sparger 69 is submerged in the main oxidation basin 51 and forces sulfite oxidation by adding oxidant to the solution, and distributes make-up ammonia from an ammonia tank 19 (see also Fig.1). The make-up ammonia serves to regulate the solution pH.

Oxidant is sparged in the main oxidation basin 51 through the sparger 69, which is provided by desulfurized flue gas recycled through the recycling line 47 from the top of the tower section 23 and the oxidant feeding duct.

As noted above, in addition to, or instead of, recycling desulfurized flue gas from the desulfurized flue gas outlet of the desulfurizing scrubber, desulfurized flue gas can be recycled (line 47X) from the CCS system (carbo dioxide capture unit), upstream the CO₂ capture step. This will provide desulfurized flue gas which is also cooled and conditioned.

. Regardless of which source of desulfurized flue gas is used (whether the desulfurized flue gas outlet or the carbon dioxide capture unit 9), the oxidation reaction in the main oxidation basin 51, and in the sump 37 is promoted by residual oxygen contained in the recycled desulfurized flue gas delivered by the fan 45.

Water balance is achieved with a water make-up source, not shown in Fig.2, through a water make-up line 73. The largest portion of the make-up water is required to saturate the flue gas. A portion of water may be removed from the ammonia sulfate in a dewatering step and recycled. Other sources of water, such as the condensation from the downstream carbon dioxide capture unit 9 (Fig.1) may further reduce total make-up water requirements.

By utilizing residual heat from the flue gas and splitting the absorber sump 37, the concentration of ammonia sulfate species in the circulating solution is significantly lower than that of the product. A lower ammonia sulfate concentration in the circulating solution aids forced oxidation, reduces the partial pressure of ammonia and SO₂ and ultimately reduces ammonia slip.

Avoidance of high ammonia sulfate solution concentrations, high solution pH (higher than pH 5), and poor oxidation can help avoid aerosol formation.

The main reactions associated with each process step performed in the desulfurizing scrubber 20 and the general location where they take place are as follows.

Formulated ammonia sulfate solution enters the absorber tower section 23 through the liquid distributor 61 and the spray nozzles 63. The pH of the ammonia sulfate solution is slightly less than 5 and absorbs SO₂ from flue gas rising counter-currently through the packing 53. Dissolution of SO₂ according to eq. 1

*SO*₂ + *H*₂*O* ↔ *H*₂*SO*₃ eq. 1

begins to influence speciation lowering the pH and forming more acidic species according to eq. 2 and eq. 3

*H*₂*SO*₃ *+* (*NH*₄)₂*SO*₄ ↔ *NH*₄*HSO*₄ *+ NH*₄*HSO*₃ eq. 2

*H*₂*SO*₃ *+* (*NH*₄)₂*SO*₃ ↔ 2*NH*₄*HSO*₃ eq. 3

The acidified ammonia sulfate solution exits the packing at a pH of approximately 3.0 to 3.5.

In the main oxidation basin 51 ammonia and desulfurized flue gas containing oxygen are added to adjust the pH value and thus shifting the speciation to less acidic species according to eq.4, eq.5 an eq.6

*H*₂*SO*₃ *+ NH*₃ ↔ *NH*₄*HSO*₃ eq. 4

*NH*₄*HSO*₃ *+ NH*₃ ↔ (*NH*₄)₂*SO*₃ eq. 5

*NH*₄*HSO*₄ *+ NH*₃ ↔ (*NH*₄)₂*SO*₄ eq. 6

promoting the conversion of sulfite to sulfate, eq 7:

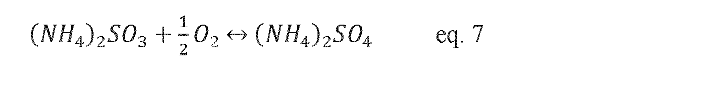

Ammoniated solution provides a very efficient system for absorbing SO₂ especially at higher SOₓ flue gas concentrations.

Sulfite ion, SO₃²⁻, is the ionic form of aqueous SO₂ which forms during wet flue gas desulfurization. Sulfite is bound less tightly to the solution than sulfate, SO₄²⁻and is associated with increased partial pressures of SO₂, and associated tendencies to form aerosols.

As described above, the oxidation reaction is performed using oxygen from desulfurized flue gas recycled from downstream the absorber tower section 23, or if convenient, from a location in the CCS system upstream the CO₂ capture step (carbon dioxide capture unit 9), instead of sparging air, as in the desulfurizing processes of the prior art. Avoiding addition of air to the flue gas streaming through the desulfurizing and carbon capture processes 5 and 9 and using the residual oxygen contained in the flue gas to promote the oxidation reaction in the basin 51 and the sump 37 improves the efficiency of the desulfurization and carbon dioxide capture process as a whole.

In fact, according to prior art desulfurizing processes, for simple air sparging the air volume flow added is expected to be about 5% of the total flue gas flow. In the conventional desulfurizing processes, air added contributes to volume of flue gas processed in a downstream CCS system. Furthermore, air sparging decreases CO₂ concentration in the desulfurized flue gas by dilution with unreacted air (mainly nitrogen but also the bulk of oxygen due to mass transfer limitations).

By avoiding air sparging, otherwise applied in the current art, and recycling desulfurized flue gas towards the sump 37 and/or the main oxidation basin 51 a twofold advantage is achieved:
- the total flowrate streaming from the desulfurization process 5 through the carbon dioxide capture unit 9 is reduced, since no air flow is added;
- the carbon dioxide concentration in the stream flowing through the carbon dioxide capture unit 9 is increased, thus making the carbon capture process more efficient.

Exemplary embodiments have been disclosed above and illustrated in the accompanying drawings. It will be understood by those skilled in the art that various changes, omissions and additions may be made. The scope of the invention is defined in the following claims.

## Claims

1. A method for removing carbon dioxide from flue gas, the method comprising the following steps:
desulfurizing a flue gas stream (3) in an ammonia-based desulfurizing scrubber (5,20) and removing sulfur oxides therefrom; and
processing the desulfurized flue gas to remove carbon dioxide therefrom through an ammonia-utilizing carbon dioxide capture unit (9);
wherein the desulfurizing step comprises recycling desulfurized flue gas as an oxidant towards the desulfurizing scrubber (5,20).

2. The method of claim 1, wherein desulfurized flue gas is recycled from a desulfurized flue gas outlet of the desulfurizing scrubber (5,20).

3. The method of claim 1 or 2, wherein desulfurized flue gas is recycled from the ammonia-utilizing carbon dioxide capture unit (9).

4. The method of claim 3, wherein desulfurized flue gas is recycled from downstream a further cooling and conditioning step in the ammonia-utilizing carbon dioxide capture unit (9).

5. The method of one or more of the preceding claims, wherein the ammonia-utilizing carbon dioxide capture unit (9) is a chilled ammonia process unit.

6. An ammonia-utilizing carbon capture system for treating post-combustion flue gas, the system comprising:
an ammonia-based desulfurizing scrubber (5,20), including a flue gas inlet (27), an oxidant feeding duct, and a desulfurized flue gas outlet; and
an ammonia-utilizing carbon dioxide capture unit (9) fluidly coupled to the ammonia-based desulfurized scrubber (5,20) and adapted to receive desulfurized flue gas therefrom;
wherein the oxidant feeding duct is fluidly coupled to a desulfurized flue gas recycling line (47), and adapted to feed desulfurized flue gas to the desulfurizing scrubber (5,20) as oxidant.

7. The system of claim 6, wherein the oxidant feeding duct is fluidly coupled to the desulfurized flue gas outlet of the desulfurizing scrubber (5,20).

8. The system of claim 6 or 7, wherein the oxidant feeding duct is fluidly coupled to the ammonia-utilizing carbon dioxide capture unit (9).

9. The system of claim 8, wherein the oxidant feeding duct is fluidly coupled to the ammonia-utilizing carbon dioxide capture unit (9) downstream a cooling and conditioning step.

10. The system of one or more of claims 6 to 9, wherein the ammonia-utilizing carbon dioxide capture unit (9) is based on a chilled ammonia process.

11. The system of any one of claims 6 to 10, wherein the desulfurizing scrubber (20) comprises:
a flue gas quench duct (25), the flue gas inlet (27) being fluidly coupled to the flue gas quench duct (25);
a quenching distributor (31) adapted to dispense an ammonia salt solution in the flue gas streaming through the quench duct (25)
a concentrated ammonia solution collecting sump (37) at the bottom of the flue gas quench duct (25); and
a sulfur oxides absorber tower section (23), fluidly coupled to the flue gas quench duct (25) and to the desulfurized flue gas outlet; wherein the sulfur oxides absorber tower section (23) comprises an oxidation basin (51) and a liquid distributor (61) adapted to dispense an ammonia salt solution in the flue gas streaming through the sulfur oxides absorber tower section (23);
wherein the oxidant feeding duct is fluidly coupled to the sump (37) and to the oxidation basin (51) to feed desulphurized flue gas therein.

## Patentansprüche

1. Verfahren zum Entfernen von Kohlendioxid aus Rauchgas, das Verfahren umfassend die folgenden Schritte:
Entschwefeln eines Rauchgasstroms (3) in einem ammoniakbasierten Entschwefelungswäscher (5, 20) und Entfernen von Schwefeloxiden daraus; und
Verarbeiten des entschwefelten Rauchgases, um Kohlendioxid daraus zu entfernen, durch eine Ammoniak verwendende Kohlendioxidabscheidungseinheit (9);
wobei der Entschwefelungsschritt ein Rückführen von entschwefeltem Rauchgas als ein Oxidationsmittel zu dem Entschwefelungswäscher (5, 20) umfasst.

2. Verfahren nach Anspruch 1, wobei entschwefeltes Rauchgas von einem Auslass für entschwefeltes Rauchgas des Entschwefelungswäschers (5,20) rückgeführt wird.

3. Verfahren nach Anspruch 1 oder 2, wobei entschwefeltes Rauchgas von der Ammoniak verwendenden Kohlendioxidabscheidungseinheit (9) rückgeführt wird.

4. Verfahren nach Anspruch 3, wobei entschwefeltes Rauchgas von stromabwärts eines weiteren Kühl- und Konditionierungsschritts in der Ammoniak verwendenden Kohlendioxidabscheidungseinheit (9) rückgeführt wird.

5. Verfahren nach einem oder mehreren der vorstehenden Ansprüche, wobei die Ammoniak verwendende Kohlendioxidabscheidungseinheit (9) eine Prozesseinheit mit gekühltem Ammoniak ist.

6. Ammoniak verwendendes Kohlenstoffabscheidungssystem zum Behandeln von Nachverbrennungsrauchgas, das System umfassend:
einen ammoniakbasierten Entschwefelungswäscher (5, 20) einschließlich eines Rauchgaseinlasses (27), eines Oxidationsmittelzuführungskanals und eines Auslasses für entschwefeltes Rauchgas; und
eine Ammoniak verwendende Kohlendioxidabscheidungseinheit (9), die mit dem ammoniakbasierten Entschwefelungswäscher (5, 20) fluidisch gekoppelt ist und angepasst ist, um entschwefeltes Rauchgas davon aufzunehmen;
wobei der Oxidationsmittelzuführungskanal mit einer Rückführungsleitung (47) für entschwefeltes Rauchgas fluidisch gekoppelt ist und angepasst ist, um entschwefeltes Rauchgas als Oxidationsmittel dem Entschwefelungswäscher (5, 20) zuzuführen.

7. System nach Anspruch 6, wobei der Oxidationsmittelzuführungskanal mit dem Auslass für entschwefeltes Rauchgas des Entschwefelungswäschers (5, 20) fluidisch gekoppelt ist.

8. System nach Anspruch 6 oder 7, wobei der Oxidationsmittelzuführungskanal mit der Ammoniak verwendenden Kohlendioxidabscheidungseinheit (9) fluidisch gekoppelt ist.

9. System nach Anspruch 8, wobei der Oxidationsmittelzuführungskanal mit der Ammoniak verwendenden Kohlendioxidabscheidungseinheit (9) stromabwärts eines Kühl- und Konditionierungsschritts fluidisch gekoppelt ist.

10. System nach einem oder mehreren der Ansprüche 6 bis 9, wobei die Ammoniak verwendende Kohlendioxidabscheidungseinheit (9) auf einem Prozess mit gekühltem Ammoniak basiert.

11. System nach einem der Ansprüche 6 bis 10, wobei der Entschwefelungswäscher (20) umfasst:
einen Rauchgasabschreckkanal (25), wobei der Rauchgaseinlass (27) mit dem Rauchgasabschreckkanal (25) fluidisch gekoppelt ist;
einen Abschreckverteiler (31), der angepasst ist, um eine Ammoniaksalzlösung in das Rauchgas abzugeben, das durch den Abschreckkanal (25) strömt
einen Sammelbehälter (37) für konzentrierte Ammoniaklösung an dem Boden des Rauchgasabschreckkanals (25); und
einen Schwefeloxidabsorberturmabschnitt (23), der mit dem Rauchgasabschreckkanal (25) und mit dem Auslass für entschwefeltes Rauchgas fluidisch gekoppelt ist; wobei der Schwefeloxidabsorberturmabschnitt (23) ein Oxidationsbecken (51) und einen Flüssigkeitsverteiler (61) umfasst, der angepasst ist, um eine Ammoniaksalzlösung in das Rauchgas abzugeben, das durch den Schwefeloxidabsorberturmabschnitt (23) strömt;
wobei der Oxidationsmittelzuführungskanal mit dem Behälter (37) und mit dem Oxidationsbecken (51) fluidisch gekoppelt ist, um entschwefeltes Rauchgas dorthin zuzuführen.

## Revendications

1. Procédé d'élimination du dioxyde de carbone de gaz de combustion, le procédé comprenant les étapes suivantes :
la désulfuration d'un courant de gaz de combustion (3) dans un laveur de désulfuration à base d'ammoniac (5, 20) et l'élimination d'oxydes de soufre de celui-ci ; et
le traitement du gaz de combustion désulfuré pour en éliminer le dioxyde de carbone à travers une unité de capture de dioxyde de carbone (9) utilisant de l'ammoniac ;
dans lequel l'étape de désulfuration comprend le recyclage du gaz de combustion désulfuré en guise d'oxydant vers le laveur de désulfuration (5, 20).

2. Procédé selon la revendication 1, dans lequel le gaz de combustion désulfuré est recyclé à partir d'une sortie de gaz de combustion désulfuré du laveur de désulfuration (5, 20).

3. Procédé selon la revendication 1 ou 2, dans lequel le gaz de combustion désulfuré est recyclé à partir de l'unité de capture de dioxyde de carbone (9) utilisant de l'ammoniac.

4. Procédé selon la revendication 3, dans lequel le gaz de combustion désulfuré est recyclé à partir de l'aval d'une étape supplémentaire de refroidissement et de conditionnement dans l'unité de capture de dioxyde de carbone (9) utilisant de l'ammoniac.

5. Procédé selon l'une ou plusieurs des revendications précédentes, dans lequel l'unité de capture de dioxyde de carbone (9) utilisant de l'ammoniac est une unité de traitement d'ammoniac réfrigéré.

6. Système de capture du carbone utilisant de l'ammoniac pour traiter un gaz de fumée après combustion, le système comprenant :
un laveur de désulfuration à base d'ammoniac (5, 20), comportant une entrée de gaz de combustion (27), un conduit d'alimentation en oxydant et une sortie de gaz de combustion désulfuré ; et
une unité de capture de dioxyde de carbone (9) utilisant de l'ammoniac accouplée fluidiquement au laveur de désulfuration à base d'ammoniac (5, 20) et apte à recevoir un gaz de combustion désulfuré à partir de celui-ci ;
dans lequel le conduit d'alimentation en oxydant est accouplé fluidiquement à une ligne de recyclage (47) de gaz de combustion désulfuré, et apte à amener le gaz de combustion désulfuré au laveur de désulfuration (5, 20) en tant qu'oxydant.

7. Système selon la revendication 6, dans lequel le conduit d'alimentation en oxydant est accouplé fluidiquement à la sortie de gaz de combustion désulfuré du laveur de désulfuration (5, 20).

8. Système selon la revendication 6 ou 7, dans lequel le conduit d'alimentation en oxydant est accouplé fluidiquement à l'unité de capture de dioxyde de carbone (9) utilisant de l'ammoniac.

9. Système selon la revendication 8, dans lequel le conduit d'alimentation en oxydant est accouplé fluidiquement à l'unité de capture de dioxyde de carbone (9) utilisant de l'ammoniac en aval d'une étape de refroidissement et de conditionnement.

10. Système selon l'une ou plusieurs des revendications 6 à 9, dans lequel l'unité de capture de dioxyde de carbone (9) utilisant de l'ammoniac est basée sur un processus d'ammoniac réfrigéré.

11. Système selon l'une quelconque des revendications 6 à 10, dans lequel le laveur de désulfuration (20) comprend :
un conduit de trempe de gaz de combustion (25), l'entrée de gaz de combustion (27) étant accouplée fluidiquement au conduit de trempe de gaz de combustion (25) ;
un distributeur de trempe (31) apte à distribuer une solution de sel d'ammoniac dans le gaz de combustion s'écoulant à travers le conduit de trempe (25)
un puisard (37) collecteur de solution d'ammoniac concentré au fond du conduit de trempe de gaz de combustion (25) ; et
une section de tour d'absorption d'oxydes de soufre (23), accouplée fluidiquement au conduit de trempe de gaz de combustion (25) et à la sortie de gaz de combustion désulfuré ; dans lequel la section de tour d'absorption d'oxydes de soufre (23) comprend un bassin d'oxydation (51) et un distributeur de liquide (61) apte à distribuer une solution de sel d'ammoniac dans le gaz de combustion s'écoulant à travers la section de tour d'absorption d'oxydes de soufre (23) ;
dans lequel le conduit d'alimentation en oxydant est accouplé fluidiquement au puisard (37) et au bassin d'oxydation (51) pour y amener un gaz de combustion désulfuré.
